# EUROPEAN PATENT SPECIFICATION

(11) **EP 1 438 892 B1**
(45) Date of publication and mention of the grant of the patent: **25.03.2009**
(21) Application number: 04075054.9
(22) Date of filing: 08.01.2004
(51) Int. Cl.: A01G 9/24

(54) **Installation comprising movable plant supports**
Anlage mit fahrbaren Tragelementen für Pflanzen
Installation comportant des supports mobiles pour plantes

(30) Priority: 14.01.2003 NL 1022384
(43) Date of publication of application: 21.07.2004
(73) Proprietor: Janssen, Elisabeth Maria, 6049 BB Herten (NL); Janssen, Sylvia Alexandra, 6049 GP Herten (NL)
(72) Inventor: Janssen, Wilhelmus Henricus Johannes, 6049 AJ Herten (NL)
(74) Representative: Valkonet, Rutger

(56) References cited:
- GB-A- 831 568
- NL-A- 8 901 762

## Description

The invention relates to an installation comprising movable plant supports, wherein a plant support is provided with a first connecting element, which is to be connected to a second connecting element, which second connecting element is connected to a supply pipe for supplying liquid, according to the pre-characterising part of claim 1.

In horticulture, frequent use is made of plant supports arranged one behind another in greenhouses or the like for supporting plants, which plant supports can be moved to specific parts inside or outside the greenhouses or the like forming cultivating spaces or the like, for example for carrying out work on the plants and/or for harvesting. This enables an efficient use of the available space, among other things, since the presence of walkways between at least most of the plant supports arranged in a row is no longer necessary. In that case means must be provided for supplying liquids, such as water, water containing nutrients or the like to the plants present on the plant supports, however. A problem in this connection is the fact that not all the movable plant supports will be arranged in a precisely defined position at all times, which leads to problems when said first and second connecting elements are connected together.

Dutch patent application No. 8901762 describes an installation in which the first connecting element is mounted on the bottom side of a plant support, which can be moved in vertical direction by means of a conveying device positioned at a higher level than the plant support. Said connecting element, which is mounted on the bottom side of the plant support co-operates with a second connecting element mounted on the upper end of a slightly flexible tube extending in vertical direction from a liquid supply pipe. When the plant support is moved downwards, a conical end of the connecting element that is mounted on the bottom side of the plant support is inserted into a recess of complementary conical shape in the second connecting element. When this known construction is used, a plant support must be moved not only in horizontal direction but also upwards and downwards, which will make the installation costly, whilst the positioning of the plant supports must still take place fairly precisely, in view of the allowed tolerance of ± 20 mm, which will be virtually impossible to realise in the case of abutting plant supports arranged in a row, which are being moved in horizontal direction.

In order to make it possible to accommodate wider tolerances, Dutch patent application No. 1016160 describes an installation in which each plant support is provided with a storage vessel, which can be filled with a liquid via a pipe disposed at a higher level than the plant supports, which pipe is provided with outflow openings, which are positioned above the storage vessels in the stationary position of the plant supports. Large tolerances can be accommodated by increasing the diameter of the upper ends of the storage vessels positioned opposite the outflow openings. The liquid can be supplied, via a hose, from the storage vessel present on a plant support to the "drip means", which are usual per se, via which the liquid is supplied to the plant.

This known solution, too, has several drawbacks. Since the storage vessels are open at their upper sides, dirt can easily find its way into the storage vessels, which dirt can be carried along with the liquid to the drip means, where the dirt will lead to the drip means becoming clogged.

Clogging of the drip means may also take place as a result of nutrient preparations precipitating in the pipe to which the drip means are connected when the pipe runs dry. Such precipitated nutrient preparations, too, may lead to the drip means becoming clogged. Furthermore, uniform dosaging of liquid to the individual plants via the drip means cannot be optimally realised, since the liquid being supplied to the drip means is under a comparatively low pressure. In addition there is a risk that the temperature of the liquid in the storage vessels will run up too high, which, also in combination with fouling, may cause disease among the plants.

According to the invention, means are provided for moving the second connecting element with respect to the first connecting element for connecting/disconnecting the two connecting elements to/from each other.

When using the construction according to the invention, the second connecting element, which is connected to the liquid supply pipe, can be connected to the first connecting element of a stationary plant support in a simple manner, with large tolerances, even variations of ± 25 cm in the position of a connecting element connected to a plant support, being accommodated.

Preferably, at least one of the connecting elements can be moved against spring pressure, which helps to achieve a proper connection of the connecting elements, making it possible to supply liquid to the plant support under a pressure of 0.5-1.5 bar so as to realise an optimum liquid supply to the plants present on the plant support, as a result of which liquid supply installations that are already present in some cases can be used in the installation according to the invention. Preferably, the spring force can be adjusted to conform to the pressure being used in practice of the liquid that is being supplied.

When drip means are used for supplying liquids to plants present on the plant supports, the construction is preferably such that the free end of the first connecting element is positioned at the same level or at a higher level than the upper end of the drip means. This eliminates the risk of a pipe to which the drip means are connected running dry and thus of nutrient substances precipitating in said pipe, as well of the risk of liquid flowing out of the first connecting element connected to the plant support when disconnecting the connecting elements.

The invention further relates to a method for operating an installation comprising movable plant supports as described in the pre-characterising part of claim 16, wherein according to the invention the second connecting element is moved by means of moving means with respect to the first connecting element for connecting/disconnecting the two connecting elements to/from each other.

Using this method, an effective, efficient supply of liquid to plants present on the plant support can be realised.

The invention and its concomitant further advantages will be set forth in more detail below with reference to the appended Figures, which show possible embodiments of the construction according to the invention.
Figure 1 is a schematic top plan view of a number of plant supports that may be disposed in a greenhouse or the like, for example.
Figure 2 is a front view of Figure 1.
Figure 3 is a perspective view of a movable plant support and connecting elements.
Figure 4 is a view of a first connecting element, which is mounted on one end of a line connected to the plant support (not shown), and of a second connecting element, which is connected to a liquid supply line.
Figure 5 is a top plan view of Figure 4.
Figure 6 is a larger-scale view of a part of Figure 4.
Figure 7 is a sectional view of Figure 6, along the line VII-VII in Figure 6.
Figure 8 is a sectional view corresponding to Figure 7, in which the two connecting elements are shown to have been moved in comparison to the position that is shown in Figure 7.
Figure 9 is a larger-scale view of a possible embodiment of the two connecting elements.
Figure 10 is a top plan view of connecting elements comprising a guide means different from the guide means used in the preceding Figures, which guide means functions to guide the connecting elements with respect to each other.
Figure 11 is a view of the guide means, seen in the direction indicated by the arrow XI in Figure 10.
Figure 12 is a view corresponding to Figure 10, in which the connecting elements are shown to have been moved a certain distance with respect to each other in comparison with a position that is shown in Figure 10.
Figure 13 is a view corresponding to Figure 10, showing the two connecting elements in a position in which they abut against each other.
Figure 14 shows another possible embodiment of the construction according to the invention.

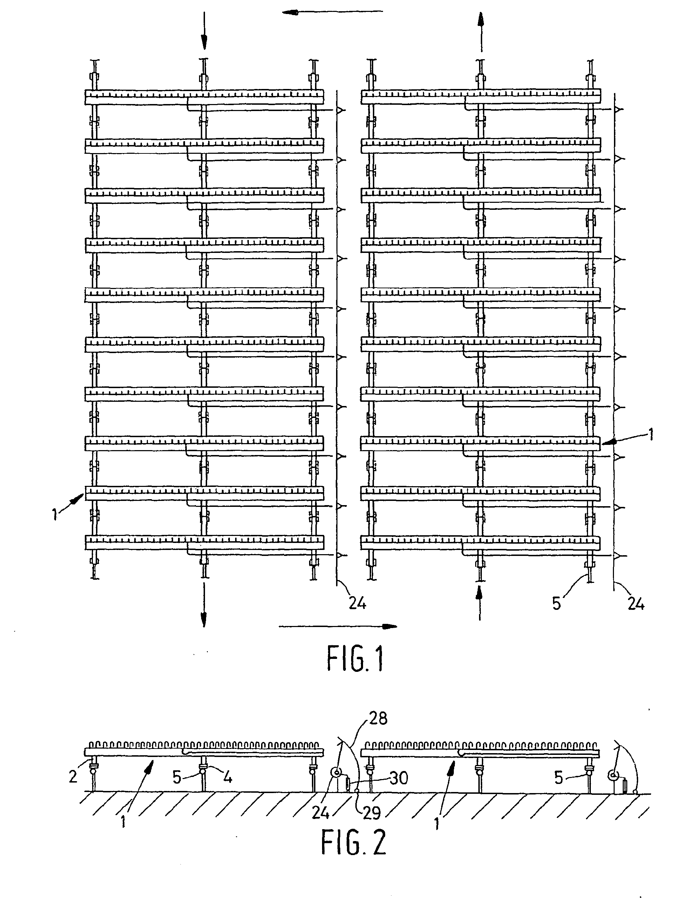

As Figure 1 schematically shows, a number of plant supports 1 may be arranged in two rows extending beside each other in a greenhouse or the like. Embodiments comprising a hundred or more plant supports arranged in a row are conceivable.

Usually, the plant supports 1 of a first row are moved in a first direction and they are moved in opposite direction in a second row, as is indicated by the arrows in Figure 1, wherein a plant support present at the end of one row can be moved sideways to the other row. The plant supports arranged in a row generally abut against each other, and they are moved in the longitudinal 1 direction of the row by means which are known per se, which means do not form part of the invention and are not shown, therefore. A plant support present near one end of a row may be separated from the other plant supports, for example, and be moved to another space for the purpose of carrying out work on the plant and/or for harvesting. Several variations with regard to the arrangement of the plant supports and/or with regard to the movement of the plant supports are conceivable.

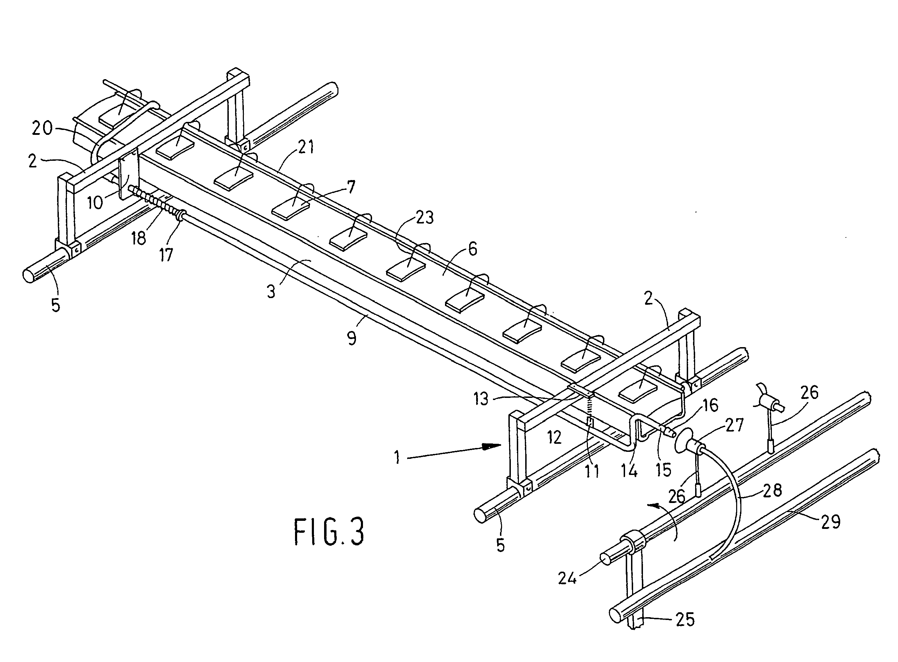

As is schematically shown in more detail in Figure 3, a plant support 1 may comprise a few portal-shaped frames 2, which jointly support a gutter-shaped support 3. The portal-shaped frames 2 are supported, via ground wheels 4, on rails 5 extending in the longitudinal direction of a row of plant supports 1. Usually a substrate layer 6 is present in the gutter-shaped support 3, in which layer substrate blocks 7, which are generally made of the same material as the substrate layer 6, are placed, with each of the substrate blocks 7 supporting a plant or the like (not shown).

A line 9 is fitted substantially parallel to the gutter-shaped support 3, which line is supported near one end by an arm 10 attached to the frame 2, and that in such a manner that the line 9 is movable in its longitudinal direction with respect to the arm on support 10. An ear 11 is attached to the line near the end remote from the support 10, to which ear the bottom end of a tension spring 12 is connected. The upper end of the spring 12 that extends upwards from the line 9 is connected to an arm 13, which is attached to another frame 2. Near the spring 12, the line 9 comprises a part 14 which extends upwards at an angle of 90° with respect to the part of the line 9 that extends parallel to the gutter-shaped support 3, and which blends near its upper end into a part 15 which extends at least substantially parallel to the longitudinal direction of the gutter-shaped support 3, to the free end of which part 15 a connecting element 16 is connected.

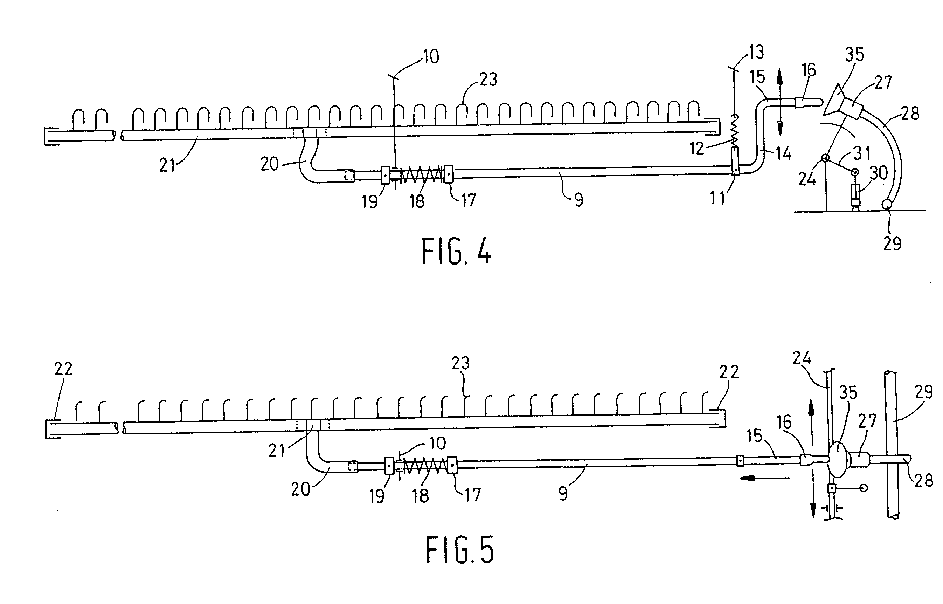

A compression spring 18 surrounding the line 9 is fitted between the support 10 that is attached to the one frame 2 and a movable stop collar 17 that can be fitted to the line 9 in several positions, which spring 18 opposes the line 9 from moving to the left, seen in Figures 3 and 4. An adjustable stop collar 19 is fitted to the line, on the side of the support 10, remote from the spring, which stop collar limits movement of the line 9 to the right, seen in Figures 3 and 4.

Connected to the end of the line 9 remote from the connecting element 16 is a flexible hose 20, which connects the line 9 to a line 21 that is connected to the gutter-shaped support 13, which line 21 is closed by sealing caps 22 at its ends. Connected to the line 21 are so-called drip means 23, which are known per se and which are provided at their free ends with pin-shaped members to be inserted into the substrate blocks, said pin-shaped members being provided with a ventilating opening at their upper ends. Upon installation, it is preferably ensured that said ventilating openings are positioned at least substantially at the same level as the opening of the connecting element 16.

In addition to the components as described above, the installation according to the invention preferably comprises, near each row of plant supports arranged one behind another, a shaft 24 extending in the longitudinal direction of a row of plant supports, which shaft is rotatably journalled in supports 25 fixed to the bottom. Upwardly extending arms 26 are fitted to the shaft 24 in regularly spaced-apart relationship, with the spacing between two successive arms 26 being at least substantially equal to the width of a plant support.

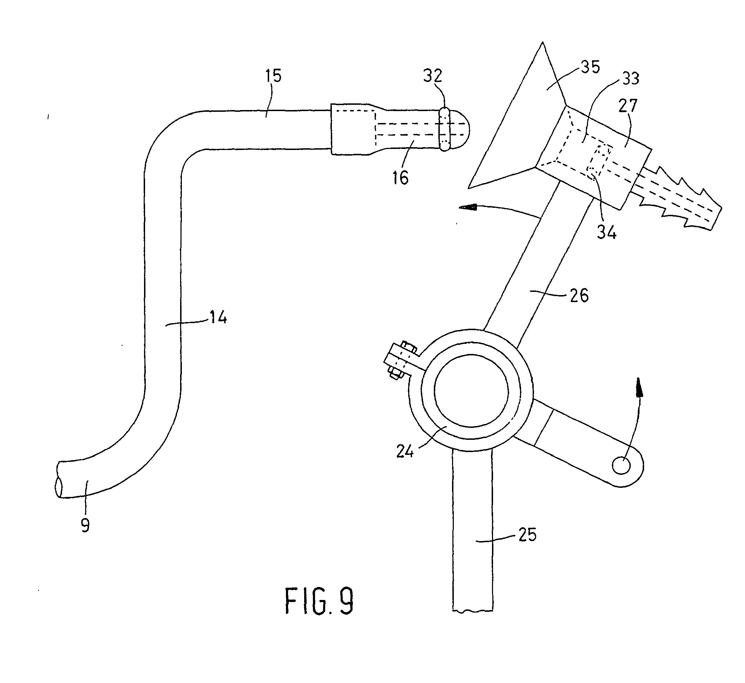

Mounted on the upper end of an arm 26 is a second connecting element 27. Said second connecting element 27 is connected, by means of a hose 28, to a supply line 29 for supplying liquid, for example water or water containing nutrients. The shaft 24 can be rotated by means of an operating mechanism, for example a setting cylinder 30, which is coupled to the end of an arm 31 that is attached to the shaft 24, all this in such a manner that rotation of the shaft 24 makes it possible to pivot the second connecting element 27 towards the first connecting element 16 for connecting the two connecting elements, as is indicated by means of an arrow in Figures 4 and 9, and to pivot the second connecting element 27 in a direction away from the first connecting element 16 for disconnecting the connecting elements.

As is shown in Figure 9, the connecting element 16, which is preferably made of a slightly elastic material, may be provided with a sealing ring 32, which can be accommodated in a chamber 33 that is recessed in the connecting element 27, in which chamber 33, a further sealing ring 34 may be present for providing an effective seal between the interconnected connecting elements 16 and 27. Also other means for providing a seal between the two connecting elements 16 and 27 in their connected position are conceivable, of course, whilst it is also possible to fit a known valve mechanism (not shown), for example in the connecting element 27, which prevents liquid from flowing out of the connecting element 27 in the position in which the connecting element 27 is disconnected from the connecting element 16, and which is automatically forced open when the two connecting elements 16 and 27 are being interconnected so as to allow liquid to pass.

Mounted on the end of the connecting element 27 that faces towards the connecting element 16 is a guide means 35 which forms a funnel-shaped element in the illustrated embodiment, the diameter of which element gradually increases in the direction of the first connecting element 16. The funnel-shaped guide means 35 may be of circular, elliptical or polygonal section or the like.

Once a plant support has reached a stationary position near a connecting element 27, the connecting element 27 can be pivoted towards the connecting element 16 in question through rotation of the shaft 24. If the two connecting elements 16 and 27 are not aligned, the connecting element 16 will come into contact with the inner wall of the guide means 35 and thus be guided in the direction of the connecting element 27.

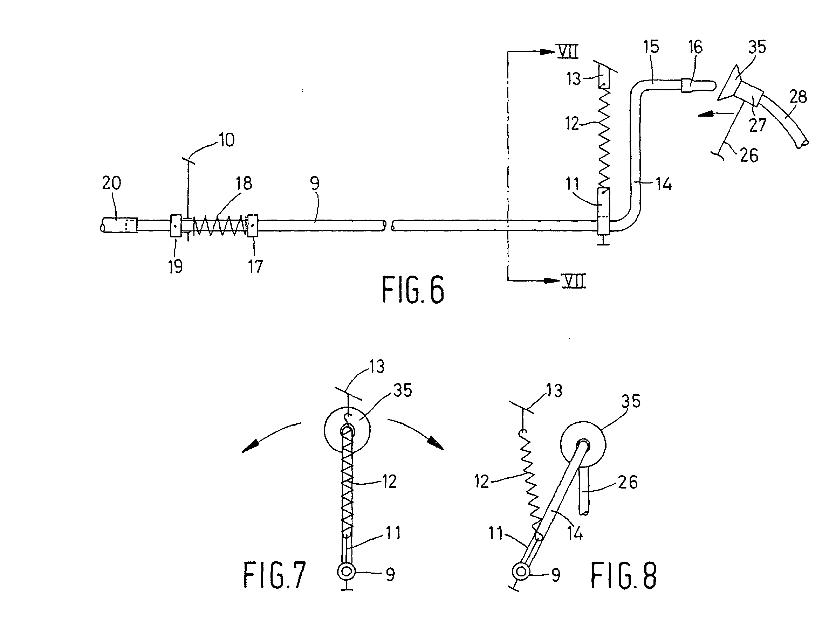

As a result of the above-described suspension of the line 9, on the end 15 of which the connecting element 16 is mounted, the connecting element 16 can be moved both in vertical direction and in horizontal direction, substantially parallel to the direction of movement of the plant supports 1, as well as in the longitudinal direction of the line 9, as is indicated by means of arrows in Figures 4 and 5, with the end 15 of the line 9 provided with the connecting element 16 maintaining an at least substantially horizontal position at all times so as to enable an effective connection thereof to the connecting element 27. A possible position of the line 9 and the connecting element 16 connected thereto is shown by way of example in Figure 8, in which the line 9 carrying the connecting element 16 is shown to have been pivoted relative to the disconnected and unloaded position of the line 9.

After the connection between the connecting elements 16 and 27 has thus been realised, liquid under pressure can be supplied via the line 29, which liquid will flow to the drip means 23, via the hoses 28, the connecting elements 16 and 27, the lines 9, the hoses 20 and the lines 21, for supplying the liquid to the substrates 7 present in the gutter-shaped supports 3. Preferably, the liquid is supplied under a pressure of 0.5-1.5 mbar, at which pressure a uniform distribution of the liquid over the various drip means 23 can be effected.

The spring 18 prevents the connecting element 16 from being forced aside in a direction away from the connecting element 27 under the influence of said liquid pressure.

When sufficient liquid has been supplied and/or when the plant supports are to be moved, the shaft 24 carrying the connecting elements 27 is pivoted back to the position as illustrated in the Figures, whereby the connection between the connecting elements 16 and 27 is broken and the plant supports can be moved without the connecting elements 27 and the like interfering with said movement. The pressure on the liquid in the line 29 will be released before the connecting elements 16 and 27 are disconnected, of course, in order to prevent the liquid flowing out of the connecting elements 27.

After the connecting elements have been disconnected, the line 9 and the connecting element mounted thereon will return to the unconnected position that is shown in the Figures under the influence of the force of gravity. Practically no liquid will flow out of the connecting element 16 because, as set forth above, one end of a line 9, which carries a connecting element 16, is positioned at a higher level than the other parts of the line 9 and at the same level or at a slightly higher level than the ventilating openings in the drip means 23. The selected construction furthermore ensures that liquid remains present at least in the larger part of the line 9, thus preventing any nutrients or the like that may be present in the liquid from precipitating in the pipe.

It will be apparent that the springs 12 and/or 18 may be substituted for means having a corresponding spring action.

It is noted that if shut-off valves are fitted in the connecting elements 27, the liquid pressure in the line 29 can also be maintained, if desired, when the connecting elements 27 are separated from the connecting elements 16. If the connecting elements 27 are provided with shut-off valves, it is furthermore not necessary for each connecting elements 27 to be connected to a connecting element 16 while liquid is being supplied, which may be advantageous in some cases.

Since a fairly large diameter may be selected for the open end of the guide means 35, variations of 25 cm and more in the position of the connecting elements 16 with respect to the position of the connecting elements 27 can be accommodated without any problem when using the construction according to the invention, as has become apparent in practice, so that large tolerances can be accommodated whilst retaining an effective operation of the installation.

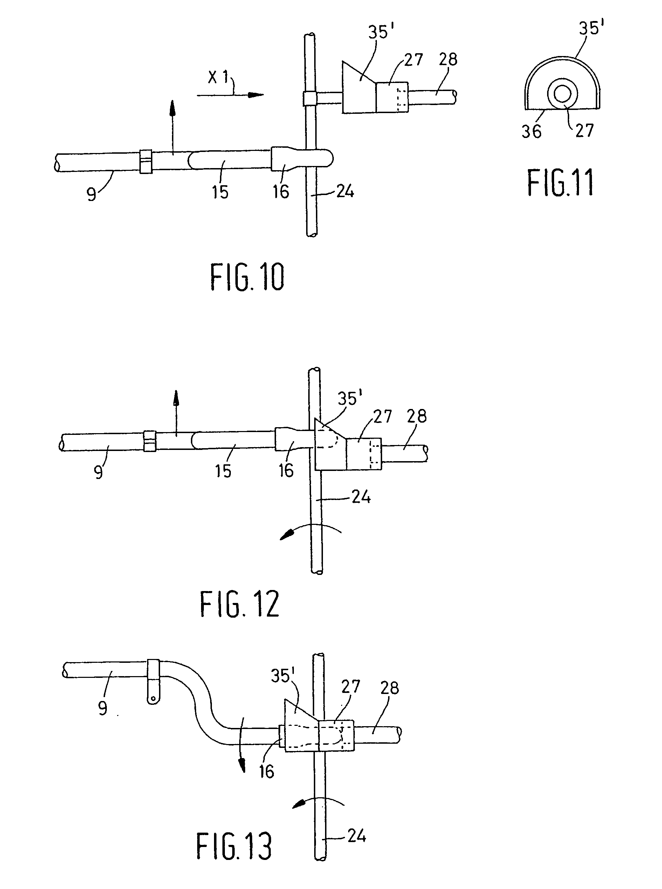

If the spacing between successive connecting elements 27 is not large enough to enable the use of a guide means 35 having a large diameter at its open end, the embodiment that is shown in Figures 10-13 may be used.

In Figures 10-13, parts corresponding to parts that have been described above with reference to Figures 1-9 are indicated by the same numerals as in Figures 1-9, which parts will not be discussed again.

As is apparent from Figures 10-13, use is made of a guide means 35' whose shape is more or less similar to that of the guide means 35, with this exception that part of the guide means 35' has been left out at the front side, seen in the direction of movement of the connecting elements 16 as indicated by arrows in Figures 10 and 12, so as to form a lead hole 36 for the connecting element 16 in the guide means 35'. The connecting element 27 and the guide means 35' can be pivoted from a first position as shown in Figure 10, in which the connecting element 16 can pass the connecting element 27 without impediment, to an intermediate position as shown in Figure 12, wherein the inner wall of the guide means 35' lies in the path of movement of the connecting element 16, so that the connecting element 16 can move into the interior of the guide means 35' via the lead hole 36 to be engaged by the inner wall of the guide means 35. Upon further pivoting of the connecting element 27 and the guide means 35' to the end position as shown in Figure 13, an effective connection between the connecting elements 16 and 27 can be effected again, with the connecting element 16 being able to move in various directions, if necessary, as described above with reference to the first embodiment as shown in Figures 1-9.

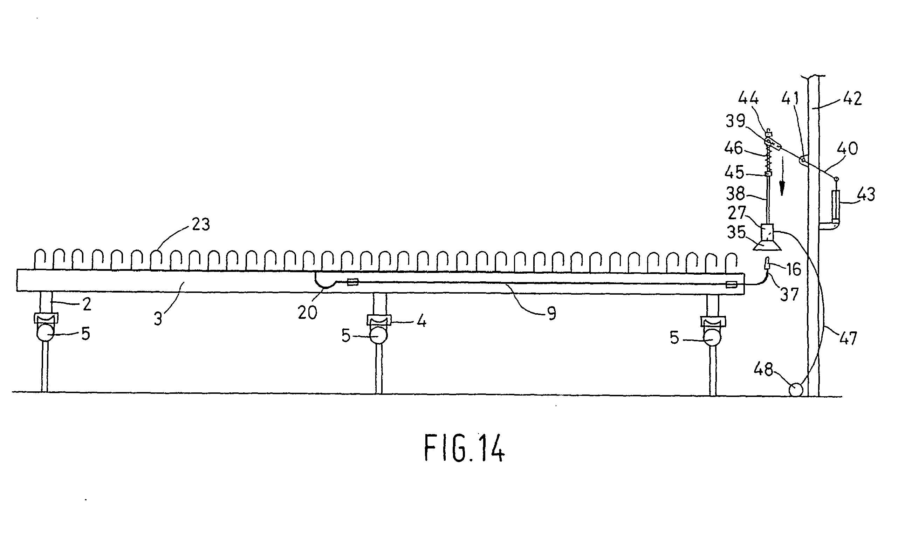

Figure 14 shows a further embodiment of the installation according to the invention. In Figure 14, parts that correspond to parts described above with reference to the preceding Figures are indicated by the same numerals as in said Figures, and consequently they will not be discussed in detail again.

In this embodiment, the line 9 is fixedly connected to the gutter-shaped support 3. The free end 37 of the line 9, on which the connecting element 16 is present, is deflected upwards at right angles with respect to the remaining part of the pipe. The connecting element 27 fitted with the guide means 35 (or 35') is mounted on the bottom end of an upwardly extending rod 38, whose upper end is slidably supported in a bush 39. The bush 39 is pivotally connected, by means of a known universal coupling, to a lever 40, which is pivotally connected, by means of a shaft 41 extending in horizontal direction, transversely to the rod 38, to an upright 42 of a greenhouse of the like, for example. A setting cylinder 43 fitted between the upright 42 and the lever 40 is connected to the end of the lever 40 remote from the bush 39. Several rods 38 fitted with connecting elements may be connected to the shaft 41 by means of arms mounted in spaced-apart relationship on the shaft 41.

Connected to the end of the rod 38 that projects above the bush 39 is a locking ring 44 for limiting the downward movement of the rod 38 with respect to the bush 39. A retaining ring 45, which is adjustable with respect to the rod 38, is mounted on the rod 38, some distance below the bush 39. A compression spring 46 is provided between the bush 39 and the retaining ring 45, which spring exerts a downward force, seen in Figure 14, on the rod 38, which takes up an at least substantially vertical position in unloaded condition. It will be apparent that the magnitude of the force that is exerted on the rod 38 by the compression spring 46, can be set by adjusting the position of the retaining ring 45 with respect to the rod 38.

The connecting element 27 is connected to a liquid supply line 48 by means of a hose 47.

It will be apparent that the connecting element 27 can be moved in a direction towards the connecting element 16 by means of the setting cylinder 43 for interconnecting the two connecting elements 16 and 27, and in a direction away from the connecting element 16 for moving the two connecting elements 16 and 27 apart. The above-described pivoted suspension of the connecting elements 27 via the universal coupling makes it possible, through cooperation between the connecting elements 16 and the guide means 35, to move the connecting element 27 to a position suitable for interconnecting the two connecting elements 16 and 27, in a similar manner as described above, because the connecting element 27 can move in particular in a direction parallel to the intended direction of movement of the plants supports, but also in a direction transversely to said direction of movement. The spring 46 can provide an effective abutment against each other of the two connecting elements 16 and 27. Also in this embodiment the arrangement is preferably such that the mouth of the connecting element 16 is positioned at substantially the same level as the ventilating openings in the drip means 23, and at a higher level than the line 9, as a result of which liquid can remain behind in the line 9 at all times.

It will be apparent that variations and/or additions to the embodiments as described above are possible within the scope of the invention as defined by the claims. The plants supports 3 may be table-shaped instead of gutter shaped, for example, with plants being arranged beside and behind each other.

Furthermore it is for example possible to suspend the movable plants supports from rails or the like positioned at a higher level.

## Claims

1. An installation comprising plant supports (1), which are arranged in a row, one behind the other, and which are movable in an intended direction of movement parallel to the longitudinal direction of the row and wherein each plant support has been provided with a first connecting element (16) for connection with a second connection element (27) that is connected to a liquid supply line (29) wherein at least one of the connecting elements (16) is movable with respect to the plant support in a direction substantially parallel to said intended direction of movement and wherein the connecting elements (16, 27) have been provided with co-operating parts (16, 35) for mutually aligning the connecting elements during movement of the connecting elements toward each other, **characterized in that** means are provided for moving the second connecting element (27) with respect to the first connecting element (16) for connecting/disconnecting the two connecting elements (16, 27) to/from each other.

2. An installation according to claim 1, **characterized in that** at least one of the connecting elements (16) can be moved against spring pressure (18).

3. An installation according to any one of the preceding claims, **characterized in that** said spring pressure (18) is adjustable.

4. An installation according to any one of the preceding claims, **characterized in that** in those cases where drip means (23) are used for supplying liquids to plants present on the plant supports (1), the construction is such that the free end of the first connecting element (16) is positioned at the same level or at a higher level than the upper end of the drip means (23).

5. An installation according to any one of the preceding claims, **characterized in that** a connecting element (16) is pivotable about an axis (9) which is spaced from the connecting element (16) by some distance and which extends transversely to the intended direction of movement of a plant support (1).

6. An installation according to any one of the preceding claims, **characterized in that** the first connecting element (16) is mounted on the end of a line (9) which extends transversely to the intended direction of movement of the plant support (1), which line is movable in its longitudinal direction against spring force (18).

7. An installation according to claim 6, **characterized in that** the line (19) is suspended from the plant support (1) near the connecting element (16) via a spring member (12), whilst near its other end it is movable in its longitudinal direction so as to be accommodated in a support (10) that is attached to the plant support (1).

8. An installation according to claim 6 or 7, **characterized in that** the first connecting element (16) is mounted on an end (15) of the line (9) which extends substantially horizontally and which is positioned at a higher level than the remaining part of the line (9).

9. An installation according to any one of the preceding claims, **characterized in that** the second connecting elements (17) are mounted on a shaft (24) which is rotatable about its axis, which shaft (24) extends at least substantially parallel to the intended direction of movement of the plant supports (1).

10. An installation according to any one of the preceding claims 1 - 5, **characterized in that** the first connecting element is mounted on an upwardly curved end (37) of a line (9) connected to the plant support (1), whilst the second connecting element (27) is mounted on the bottom end of an omnilaterally hinged rod (38).

11. An installation according to claim 10, **characterized in that** the rod (38) is movable in upward direction against spring pressure (46).

12. An installation according to claim 10 or 11, **characterized in that** the rod (38) is connected near its upper end to an arm (40) which pivots about a horizontal axis (41).

13. An installation according to any one of the preceding claims, **characterized in that** the second connecting elements (27) are each connected to a liquid supply line (29) via a hose (28).

14. An installation according to any one of the preceding claims, **characterized in that** a funnel-shaped guide means (35) is connected to the second connecting element (27), the internal 1 diameter of which funnel-shaped means (35) gradually increases in a direction towards the first connecting element (16).

15. An installation according to claim 14, **characterized in that** said funnel-shaped guide means (35') is provided with a lead hole (36) for the first connecting element (16), which is formed on one side of the guide means (35').

16. A method for operating an installation comprising movable plant supports (1), which are arranged in a row, one behind the other, and which are movable in an intended direction of movement parallel to the longitudinal direction of the row and wherein each plant support (1) has been provided with a first connecting element (16) for connection with a second connecting element (27) that is connected to a liquid supply line (29), wherein at least one of the connecting elements (16) is movable with respect to the plant support (1) in a direction substantially parallel to said intended direction of movement and wherein the connecting elements have been provided with co-operating parts (16, 35) for mutually aligning the connecting elements during movement of the connecting elements towards each other, **characterized in that** the second connecting element (27) is moved by means of moving means with respect to the first connecting element (16) for connecting/disconnecting the two connecting elements (16, 27) to/from each other.

17. A method according to claim 16, **characterized in that** drip means (23) supply liquid to the plants present on the plant support (1) via the free end of the first connecting element (16), which is positioned at the same level or at a higher level than a ventilating opening formed in said drip means (23).

18. A method according to claim 16 or 17, **characterized in that** when the connecting elements (16,27) are being interconnected, a connecting element (16) is pivoted about an axis (9) which is spaced from the connecting element (16) in question by some distance and which extends transversely to the intended direction of movement of a plant support (1).

19. A method according to any one of the preceding claims 16 - 18, **characterized in that** when the connecting elements (16,27) are being interconnected, the first connecting (16) element is moved in its longitudinal direction against spring force (18), in a direction transversely to the intended direction of movement of a plant support (1).

20. A method according to any one of the preceding claims 16 - 19, **characterized in that** the liquid is led in downward direction from the first connecting element (16) to the plant support (1).

21. A method according to any one of the preceding claims 16 - 20, **characterized in that** the second connecting element (27) is pivoted with respect to the first connecting element (16) about an axis (24) which extends at least substantially parallel to the intended direction of movement of the plant supports (1).

## Patentansprüche

1. Eine Installation mit in einer Reihe eine nach der anderen angeordneten Pflanzentragelementen (1), die in einer beabsichtigten Bewegungsrichtung parallel zu der Längsrichtung der Reihe beweglich sind, wobei jedes Pflanzentragelement mit einem ersten Verbindungselement (16) zur Verbindung mit einem zweiten Verbindungselement (27) versehen ist, das mit einer Flüssigkeitszufuhrleitung (29) verbunden ist, wobei wenigstens eines der Verbindungselemente (16) in Bezug auf das Pflanzenstützelement in einer Richtung im Wesentlichen parallel zu der besichtigten Bewegungsrichtung beweglich ist und wobei die Verbindungselemente (16, 27) mit zusammenwirkenden Teilen (16, 35) zum gegenseitigen Ausrichten der Verbindungselemente während der Verbindung der Verbindungselemente zueinander versehen sind, **dadurch gekennzeichnet, dass** Mittel zum Bewegen des zweiten Verbindungselements (27) in Bezug auf das erste Verbindungselement (16) zum Verbinden/Lösen der beiden Verbindungselemente (16, 27) zu/voneinander vorgesehen sind.

2. Eine Installation nach Anspruch 1, **dadurch gekennzeichnet, dass** wenigstens eines der Verbindungselemente (16) gegen einen Federdruck (18) bewegt werden kann.

3. Eine Installation nach einem der vorangehenden Ansprüche, **dadurch gekennzeichnet, dass** der Federdruck (18) einstellbar ist.

4. Eine Installation nach einem der vorangehenden Ansprüche, **dadurch gekennzeichnet, dass** in den Fällen, in dem Betropfmittel (23) zum Zuführen von Flüssigkeit zu den Pflanzentragelementen (1) vorgesehen sind, verwendet werden, die Konstruktion derart ist, dass das freie Ende des ersten Verbindungselements (16) auf derselben Höhe oder höher als das obere Ende der Betropfmittel (23) angeordnet ist.

5. Eine Installation nach einem der vorangehenden Ansprüche, **dadurch gekennzeichnet, dass** ein Verbindungselement (16) um eine Achse (9) drehbar ist, die von dem Verbindungselement (16) um eine Distanz beabstandet ist, die sich quer zu der beabsichtigten Bewegungsrichtung eines Pflanzentragelements (1) erstreckt.

6. Eine Installation nach einem der vorangehenden Ansprüche, **dadurch gekennzeichnet, dass** das erste Verbindungselement (16) auf dem Ende einer Leitung (9) montiert ist, die sich quer zu der beabsichtigten Bewegungsrichtung des Pflanzentragelements (1) erstreckt, wobei die Leitung in ihrer Längsrichtung gegen eine Federkraft (18) beweglich ist.

7. Eine Installation nach Anspruch 6, **dadurch gekennzeichnet, dass** die Leitung (9) von dem Pflanzentragelement (1) nahe dem Verbindungselement (16) über ein Federelement (12) abgehängt ist, während sie nahe ihrem anderen Ende in ihrer Längsrichtung beweglich ist, um von einer Stütze (10) aufgenommen zu werden, die an dem Pflanzentragelement (1) angebracht ist.

8. Eine Installation nach Anspruch 6 oder 7, **dadurch gekennzeichnet, dass** das erste Verbindungselement (16) an einem Ende (15) der Leitung (9) montiert ist, das sich im Wesentlichen horizontal erstreckt und das höher als die Leitung (9) im übrigen positioniert ist.

9. Eine Installation nach einem der vorangehenden Ansprüche, **dadurch gekennzeichnet, dass** die zweiten Verbindungselemente (27) auf einer Welle (24) montiert sind, die um ihre Achse drehbar ist, wobei sich die Welle (24) wenigstens im Wesentlichen parallel zu der beabsichtigten Bewegungsrichtung der Pflanzentragelementen (1) erstreckt.

10. Eine Installation nach einem der vorangehenden Ansprüche 1-5, **dadurch gekennzeichnet, dass** das erste Verbindungselement (16) auf einem nach oben gekrümmten Abschnitt (37) einer Leitung (9) montiert ist, das mit dem Pflanzentragelement (1) verbunden ist, während das Verbindungselement (27) auf dem unteren Ende einer omnilateralen angelenkten Stange (38) montiert ist.

11. Eine Installation nach Anspruch 10, **dadurch gekennzeichnet, dass** die Stange (38) nach oben gegen Federdruck (46) beweglich ist.

12. Eine Installation nach Anspruch 10 oder 11, **dadurch gekennzeichnet, dass** die Stange (38) nahe ihrem oberen Ende mit einem Arm (40) verbunden ist, der um eine horizontale Achse (41) dreht.

13. Eine Installation nach einem der vorangehenden Ansprüche, **dadurch gekennzeichnet, dass** die zweiten Verbindungselemente (27) jeweils über einen Schlauch (28) mit einer Flüssigkeitszufizhrleitung (29) verbunden ist.

14. Eine Installation nach einem der vorangehenden Ansprüche, **dadurch gekennzeichnet, dass** ein trichterförmiges Führungsmittel (35) mit dem zweiten Verbindungselement (27) verbunden ist, wobei der Innendurchmesser des trichterförmigen Führungsmittels (35) graduell in einer Richtung hin zu dem ersten Verbindungselement (16) zunimmt.

15. Eine Installation nach Anspruch 14, **dadurch gekennzeichnet, dass** das trichterförmige Führungselement (35') mit einem Führungsloch (36) für das erste Verbindungselement (16) versehen ist, das auf einer Seite des Führungsmittels (35') ausgebildet ist.

16. Ein Verfahren zum Betreiben einer Installation mit beweglichen Pflanzentragelementen mit in einer Reihe einer nach der anderen angeordneten Pflanzentragelementen (1), die in einer beabsichtigten Bewegungsrichtung parallel zu der Längsrichtung der Reihe beweglich sind und wobei jedes Pflanzentragelement (1) mit einem ersten Verbindungselement (16) zum Verbinden mit einem zweiten Verbindungselement (27) versehen ist, das mit einer Flüssigkeitszufuhrleitung (29) verbunden ist, wobei wenigstens eines der Verbindungselemente (16) in Bezug auf das Pflanzentragelement (1) in einer Richtung im Wesentlichen parallel zu der beabsichtigten Bewegungsrichtung beweglich ist und wobei die Verbindungselemente mit zusammenwirkenden Teilen (16, 35) zum wechselseitigen Ausrichten der Verbindungselemente während der Bewegung der Verbindungselemente in Richtung zueinander versehen sind, **dadurch gekennzeichnet, dass** das zweite Verbindungselement (27) mittels Bewegungsmitteln in Bezug auf das erste Verbindungselement (16) zum Verbinden/Lösen der beiden Verbindungselemente (16, 27) zu/voneinander bewegt wird.

17. Ein Verfahren nach Anspruch 16, **dadurch gekennzeichnet, dass** die Betropfmittel (23) Flüssigkeit auf die Pflanzen, die auf dem Pflanzentragelement (1) vorhanden sind, über das freie Ende des ersten Verbindungselements (16), das auf derselben Höhe oder auf einer größeren Höhe als eine ventilierende Öffnung, die in dem Auftropfmittel (23) ausgebildet ist, positioniert ist, zuführen.

18. Eine Installation nach Anspruch 16 oder 17, **dadurch gekennzeichnet, dass d**ann, wenn die Verbindungselemente (16, 27) miteinander verbunden sind, ein Verbindungselement (16) um eine Achse (9) gedreht wird, die von dem in Frage stehenden Verbindungselement (16) um eine bestimmten Distanz beabstandet ist und die sich quer zu der beabsichtigten Bewegungsrichtung des Pflanzenstützelements (1) erstreckt.

19. Ein Verfahren nach einem der vorangehenden Ansprüche 16 - 18, **dadurch gekennzeichnet, dass** dann, wenn die Verbindungselemente (16, 27) miteinander verbunden sind, das erste Verbindungselement in seiner Längsrichtung gegen Federkraft (18) in einer Richtung quer zu der beabsichtigten Bewegungsrichtung eines Pflanzenstützelements (1) bewegt wird.

20. Ein Verfahren nach einem der vorangehenden Ansprüche 16 - 19, **dadurch gekennzeichnet, dass** die Flüssigkeit in einer Richtung nach unten von dem ersten Verbindungselement (16) zu dem Pflanzentragelement (1) geführt wird.

21. Ein Verfahren nach einem der vorangehenden Ansprüche 16 - 20, **dadurch gekennzeichnet, dass** das zweite Verbindungselement (27) in Bezug auf das erste Verbindungselement (16) um eine Achse (24) gedreht wird, die sich wenigstens im Wesentlichen parallel zu der beabsichtigten Bewegungsrichtung der Pflanzenstützelemente (1) erstreckt.

## Revendications

1. Installation comprenant des supports de plant (1), lesquels sont disposés suivant une rangée, les uns derrière les autres, et peuvent se déplacer dans une direction de déplacement souhaitée parallèle à la direction longitudinale de la rangée, et dans laquelle chaque support de plant a été doté d'un premier élément de liaison (16) pour être relié à un second élément de liaison (27) qui est relié à une ligne de fourniture de liquide (29), au moins l'un des éléments de liaison (16) pouvant se déplacer relativement au support de plan dans une direction sensiblement parallèle à ladite direction de déplacement souhaitée et les éléments de liaison (16, 27) ayant été dotés de parties coopérantes (16, 35) afin d'aligner mutuellement les éléments de liaison pendant le déplacement des éléments de liaison en direction l'un de l'autre, **caractérisée en ce que** des moyens sont prévus pour déplacer le second élément de liaison (27) relativement au premier élément de liaison (16) pour relier ensemble/séparer l'un de l'autre les deux éléments de liaison (16, 27).

2. Installation conformément à la revendication 1, **caractérisée en ce qu'**au moins l'un des éléments de liaison (16) peut se déplacer contre une pression de ressort (18).

3. Installation conformément à la revendication 1, **caractérisée en ce que** ladite pression de ressort (18) est ajustable.

4. Installation conformément à l'une quelconque des revendications précédentes, **caractérisée en ce que** dans les cas où des moyens d'arrosage goutte-à-goutte (23) sont utilisés pour fournir des liquides aux plants présents dans les supports de plant (1), la construction est telle que l'extrémité libre du premier élément de liaison (16) est positionnée au même niveau que celui de l'extrémité supérieure des moyens d'arrosage goutte-à-goutte (23) ou à un niveau supérieur.

5. Installation conformément à l'une quelconque des revendications précédentes, **caractérisée en ce qu'**un élément de liaison (16) peut pivoter de part et d'autre d'un axe (9) qui est espacé de l'élément de liaison (16) d'une certaine distance et qui s'étend transversalement à la direction de déplacement souhaitée d'un support de plant (1).

6. Installation conformément à l'une quelconque des revendications précédentes, **caractérisée en ce que** le premier élément de liaison (16) est monté sur l'extrémité d'une ligne (9) qui s'étend transversalement à la direction de déplacement souhaitée du support de plant (1), laquelle ligne peut se déplacer dans sa direction longitudinale contre une force de ressort (18).

7. Installation conformément à la revendication 6, **caractérisée en ce que** la ligne (9) est suspendue à partir du support de plant (1) à proximité de l'élément de liaison (16) via un organe ressort (12), tandis qu'elle peut se déplacer, à proximité de son autre extrémité, dans sa direction longitudinale de façon à se loger dans un support (10) qui est fixé au support de plant (1).

8. Installation conformément à la revendication 6 ou 7, **caractérisée en ce que** le premier élément de liaison (16) est monté sur une extrémité (15) de la ligne (9) qui s'étend de façon sensiblement horizontale et qui est positionnée à un niveau supérieur à celui de la partie de la ligne (9) restante.

9. Installation conformément à l'une quelconque des revendications précédentes, **caractérisée en ce que** les seconds éléments de liaison (27) sont montés sur un arbre (24) qui peut tourner de part et d'autre de son axe, lequel arbre (24) s'étend au moins de façon sensiblement parallèle à la direction de déplacement souhaitée des supports de plant (1).

10. Installation conformément à l'une quelconque des revendications 1 à 5 précédentes, **caractérisée en ce que** le premier élément de liaison (16) est monté sur une extrémité incurvée vers le haut (37) d'une ligne (9) reliée au support de plant (1), tandis que le second élément de liaison (27) est monté sur l'extrémité inférieure d'une tige (38) articulée dans tous les sens.

11. Installation conformément à la revendication 10, **caractérisée en ce que** la tige (38) peut se déplacer vers le haut contre une pression de ressort (46).

12. Installation conformément à la revendication 10 ou 11, **caractérisée en ce que** la tige (38) est reliée à proximité de son extrémité supérieure à un bras (40) qui pivote de part et d'autre d'un axe horizontal (41).

13. Installation conformément à l'une quelconque des revendications précédentes, **caractérisée en ce que** les seconds éléments de liaison (27) sont chacun reliés à une ligne de fourniture de liquide (29) via un tuyau (28).

14. Installation conformément à l'une quelconque des revendications précédentes, **caractérisée en ce qu'**un moyen de guidage en forme d'entonnoir (35) est relié au second élément de liaison (27), le diamètre interne du moyen de guidage en forme d'entonnoir (35) augmentant progressivement dans une direction allant vers le premier élément de liaison (16) ;

15. Installation conformément à la revendication 14, **caractérisée en ce que** ledit moyen de guidage en forme d'entonnoir (35) est doté d'un trou de guidage pour le premier élément de liaison (16) qui est formé sur un côté du moyen de guidage (35').

16. Procédé pour mettre en oeuvre une installation comprenant des supports de plant (1) mobiles, lesquels sont disposés suivant une rangée, les uns derrière les autres, et peuvent se déplacer dans une direction de déplacement souhaitée parallèle à la direction longitudinale de la rangée, et dans lequel chaque support de plant (1) a été doté d'un premier élément de liaison (16) pour être relié à un second élément de liaison (27) qui est relié à une ligne de fourniture de liquide (29), au moins l'un des éléments de liaison (16) pouvant se déplacer relativement au support de plant (1) dans une direction sensiblement parallèle à ladite direction de déplacement souhaitée et les éléments de liaison ayant été dotés de parties coopérantes (16, 35) pour aligner mutuellement les éléments de liaison pendant le déplacement des éléments de liaison en direction l'un de l'autre, **caractérisé en ce que** le second élément de liaison (27) se déplace à l'aide de moyens mobiles relativement au premier élément de liaison (16) pour relier ensemble/séparer l'un de l'autre les deux éléments de liaison (16, 27).

17. Procédé conformément à la revendication 16, **caractérisée en ce que** les moyens d'arrosage goutte-à-goutte (23) fournissent du liquide aux plants présents sur le support de plant (1) via l'extrémité libre du premier élément de liaison (16) qui est positionnée au même niveau que celui d'une ouverture d'aération formée dans lesdits moyens d'arrosage goutte-à-goutte (23) ou à un niveau supérieur.

18. Procédé conformément à la revendication 16 ou 17, **caractérisé en ce que,** lorsque les éléments de liaison (16, 17) sont reliés entre eux, un élément de liaison (16) pivote de part et d'autre d'un axe (9) qui est espacé de l'élément de liaison (16) en question d'une certaine distance et qui s'étend transversalement à la direction de déplacement souhaitée d'un support de plant (1).

19. Procédé conformément à l'une quelconque des revendications 16 à 18 précédentes, **caractérisé en ce que,** lorsque les éléments de liaison (16, 27) sont reliés entre eux, le premier élément de liaison (16) se déplace dans sa direction longitudinale contre la force de ressort (18) dans une direction transversale à la direction de déplacement souhaitée d'un support de plant (1).

20. Procédé selon l'une quelconque des revendications 16 à 19 précédentes, **caractérisé en ce que** le liquide est conduit en direction du bas du premier élément de liaison (16) au support de plant (1).

21. Procédé conformément à l'une quelconque des revendications 16 à 20 précédentes, **caractérisé en ce que** le second élément de liaison (27) pivote relativement au premier élément de liaison (16) de part et d'autre d'un axe (24) qui s'étend au moins de façon sensiblement parallèle à la direction de déplacement souhaitée des supports de plant (1).
